Europäisches Patentamt

(19) European Patent Office

Office européen des brevets

(11) Publication number: **0 002 947**
**B1**

(12) **EUROPEAN PATENT SPECIFICATION**

(21) Application number: **78300890.7**

(22) Date of filing: **21.12.78**

(51) Int. Cl.³: **B 24 B 53/00** //B23P15/30

(54) Shaping diamond compacts.

(30) Priority: **22.12.77 ZA 777639**
**29.12.77 ZA 777715**

(43) Date of publication of application:
**11.07.79 Bulletin 79/14**

(45) Publication of the grant of the European patent:
**25.03.81 Bulletin 81/12**

(84) Designated Contracting States:
**BE CH DE FR GB IT NL SE**

(56) References cited:
**US - A - 3 921 616**
**US - A - 4 020 820**

**INDUSTRIAL DIAMOND REVIEW,**
**vol. 15, February 1955, London**
**"Conservation of diamond wheels",**
**page 27.**

(73) Proprietor: **DE BEERS INDUSTRIAL DIAMOND DIVISION (PROPRIETARY) LIMITED**
**8th Floor 45 Main Street**
**Johannesburg Transvaal (ZA)**

(72) Inventor: **Bex, Phillip Alexander**
**3, Fangio Place Glenanda South**
**Johannesburg Transvaal (ZA)**
(72) Inventor: **Notter, Theo Axel**
**29 Langley Drive**
**Camberley Surrey (GB)**

(74) Representative: **Jones, Alan John et al,**
**CARPMAELS & RANSFORD 43 Bloomsbury Square**
**London, WC1A 2RA (GB)**

Courier Press, Leamington Spa, England.

Shaping diamond compacts

This invention relates to the shaping of diamond compacts.

Diamond compacts are well known in the art and consist essentially of a mass of diamond particles, generally present in an amount of at least 70%, preferably 80 to 90% by volume of the compact, bonded into a hard conglomerate. Compacts are polycrystalline masses and can replace single large crystals. Diamond compacts may also contain other abrasive particles such as cubic boron nitride and carbide particles.

Diamond compacts may be self bonded, i.e. the individual particles of the compact may be fused and bonded together without the aid of a metal or like bonding matrix. Alternatively, stronger and more durable compacts are produced when there is a suitable bonding matrix present.

The bonding matrix, when provided, preferably contains a solvent for diamond growth. Suitable solvents are metals of Group VIII of the Periodic Table such as cobalt, nickel or iron or an alloy containing such a metal.

The presence of a solvent or catalyst for the particular abrasive being used in the compact is desirable because then under the conditions necessary for the manufacture of such compacts intergrowth between the particles occurs. As is known in the art, diamond compacts are generally manufactured under conditions of temperature and pressure at which diamond is crystallographically stable.

Diamond compacts are used for the machining of a variety of materials such as ceramics and carbides. In use, the compacts are bonded to a suitable support such as a shank to form a tool. The compacts may be bonded to a backing such as a cemented carbide backing and then the backing bonded to the support to form the tool. Diamond compacts bonded to a cemented tungsten carbide backing are described and illustrated in British patent specifications Nos. 1,349,385 and 1,489,130.

The machining operation may take the form of cutting, milling, turning or boring. In all these operations it is a cutting edge of the compact which does the work. The cutting edge wears and dulls after extended use. The dulled edge is conventionally shaped or sharpened by means of a diamond grinding wheel, which may be a resin bonded, vitreous bonded or metal bonded grinding wheel. These techniques have been found to be expensive and time consuming.

According to the present invention there is provided a method of shaping a surface of a diamond compact including the steps of contacting the surface of the compact to be shaped with the working surface of a tool, the working surface being of a carbide-forming metal or an alloy containing such a metal, and moving the two contacting surfaces relative to each other to shape the surface of the compact to a predetermined profile. It has surprisingly been found that a surface of a diamond compact can effectively and relatively inexpensively be shaped with the use of a tool which has a working surface of a carbide forming metal or an alloy containing such a metal. In particular and preferably, the working surface of the tool consists of an alloy, the major constituent of which is iron. The alloy may contain at least 60% by weight iron and preferably contains at least 90% by weight iron. Examples of such alloys are mild steels, hardened steels and stainless steels. The preferred steel is mild steel. Mild steel generally contains from 0,2 to 2% by weight carbon and examples of such steels are those designated EN1 to EN9 steels. Examples of other useful carbide-forming metals which are useful in the practice of the invention are cobalt, nickel and molybdenum.

Contact between the relatively moving surfaces is continued, possibly with interruption, until the surface of the compact has been shaped to a predetermined or controlled profile. The surface of the compact to be shaped may be a cutting edge of the compact in which event the shaping will consist in sharpening that edge. The invention has widest application in respect of such shaping. The surface of the compact to be shaped may also be a flat surface in which event the shaping will consist in polishing that surface.

The surface of the compact to be shaped may also be a surface which defines the hole in a wire-drawing die, in which event the shaping will consist in removing material from that surface to produce a hole of predetermined profile. Wire-drawing dies consisting of a diamond compact having a centrally located double tapered hole extending therethrough and surrounded by a support such as a cemented carbide support are known. Such wire-drawing dies are described and illustrated, for example, in British patent specification No. 1,466,312. By use of the method of the invention, the double tapered hole may be produced, for example, by forming a centrally located hole by means of a laser beam and then shaping that hole to a predetermined profile as described above.

The working surface will generally be the working surface of a wheel, relative movement between the compact and wheel being achieved by rotating the wheel. The working portion may be bonded to a hub portion or the entire wheel may be made of the metal or alloy. The wheel will preferably be rotated at a high peripheral speed, i.e. peripheral speeds of greater than 10 metres per second, typically 30 metres per second. In addition to the rotation of the wheel, the two surfaces may be oscillated relative to each other in a direction transverse to the direction of rotation. When the diamond compact is bonded to a cemented carbide backing the direction of rotation of the wheel is preferably from the compact surface to the carbide surface.

An embodiment of the invention will now be described with reference to the accompanying drawings, in which:

Figures 1 and 2 illustrate plan and side elevations, respectively, of a diamond compact bonded to a cemented carbide backing; and

Figure 3 illustrates a diamond compact bonded to a cemented carbide backing mounted in a shank.

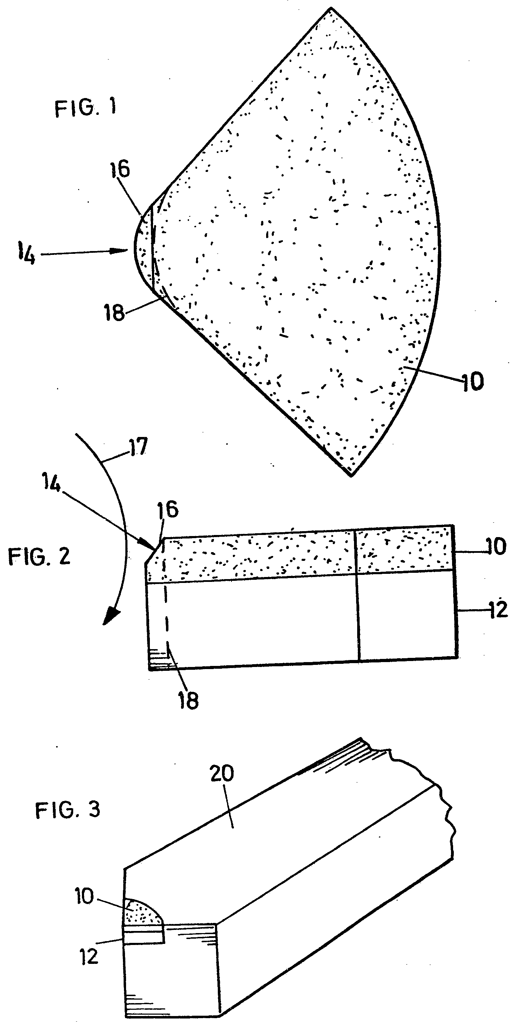

Figures 1 and 2 illustrate, in somewhat exaggerated form, the sharpening of a cutting edge of a diamond compact which has been dulled through use. The compact 10 is mounted on a carbide backing 12. The rounded top edge, generally indicated by the numeral 14 is used for machining purposes. During machining this edge dulls as indicated, in somewhat exaggerated form, at 16. The cutting edge is shaped to a profile indicated by the dotted lines 18 by means of a mild steel wheel (not shown). The direction of rotation of the wheel is shown by the arrow 17 in Figure 2. The wheel is rotated at a peripheral grinding speed of 30 metres per second and an infeed rate of 10 microns every 5 seconds. The infeed rate is not critical and will vary according to the size and nature of the compact being shaped. In addition to the rotation of the wheel, the compact is oscillated about the end 14 to produce the desired profile 18. It was found that very efficient sharpening of the cutting edge of the compact was achieved and such that no subsequent fine polishing step was required as is the case with the conventional diamond grinding wheels. Moreover, it was found that not only was the diamond compact shaped but also the carbide backing. The working surface of the grinding wheel was made of EN5 mild steel.

Figure 3 illustrates the mounting of a diamond compact on a carbide backing in a shank 20, which is typically made of a mild steel.

The cost of shaping a diamond compact on a carbide backing in the manner described above was compared with the shaping of similar compacts using diamond resin bonded, metal bonded and vitreous grinding wheels. It was found that the costs of shaping using the mild steel wheel were at least twenty times less than the costs using a resin bonded wheel and more than fifty times less the costs using a metal bond or vitreous wheel.

## Claims

1. A method of shaping a surface of a diamond compact including the steps of contacting the surface of the compact to be shaped with the working surface of a tool and moving the two contacting surfaces relative to each other to shape the surface of the compact to a predetermined profile, characterised in that the working surface is of a carbide-forming metal or an alloy containing such a metal.

2. A method according to claim 1 wherein the surface of the compact to be shaped is a cutting edge of the compact and the shaping consists in sharpening that edge.

3. A method according to claim 1 wherein the surface of the compact to be shaped is a flat surface of the compact and the shaping consists in polishing that surface.

4. A method according to claim 1 wherein the surface of the compact to be shaped is a surface defining the hole in a wire-drawing die and the shaping consists in removing material from that surface to produce a hole of predetermined profile.

5. A method according to any one of claims 1 to 3 wherein the tool is a wheel, relative movement between compact and wheel being achieved by rotating the wheel.

6. A method according to claim 5 wherein the grinding wheel is rotated at a peripheral speed of at least 10 metre/sec.

7. A method according to claim 5 wherein the grinding wheel is rotated at a peripheral speed of 30 metre/sec.

8. A method according to any one of claims 5 to 7 wherein, in addition to rotation of the wheel, the two surfaces are oscillated relative to each other in a direction transverse to the direction or rotation.

9. A method according to any one of claims 5 to 8 wherein the compact surface to be shaped is bonded to a cemented carbide surface, the direction of rotation of the wheel being from the compact surface to the carbide surface.

10. A method according to to any one of the preceding claims wherein the working surface of the tool consists of an alloy, the major constituent of which is iron.

11. A method according to claim 10 wherein the alloy contains at least 60% by weight iron.

12. A method according to claim 10 wherein the alloy contains at least 90% by weight iron.

13. A method according to any one of claims 1 to 9 wherein the working surface consists of mild steel.

## Revendications

1. Procédé de façonnage de la surface d'un comprimé de diamant comprenant les étapes suivantes:
— mise en contact de la surface à façonner avec la surface de travail d'un outil et
— mise en mouvement relatif des deux surfaces en contact pour donner à la surface du comprimé de diamant une forme prédéterminée, caractérisé par le fait que la surface de travail consiste en un métal susceptible de former un carbure ou en un alliage contenant un tel métal.

2. Procédé selon la revendication 1, caractérisé par le fait que la surface à façonner est un tranchant du comprimé et le façonnage consiste à aiguiser ce tranchant.

3. Procédé selon la revendication 1, caractérisé par le fait que la surface à façonner est une zone plane du comprimé et le façonnage consiste à polir cette zone.

4. Procédé selon la revendication 1, caractérisé par le fait que la surface à façonner est une surface définissant un orifice dans une filière de tréfilage et le façonnage consiste à enlever du matériau sur cette surface pour obtenir un orifice d'un profil prédéterminé.

5. Procédé selon l'une quelconque des revendications 1 à 3, caractérisé par le fait que l'outil est une meule, le mouvement relatif entre le comprimé et la meule étant obtenu par une rotation de cette meule.

6. Procédé selon la revendication 5, caractérisé par le fait que la meule tourne avec une vitesse périphérique d'au moins 10 m/sec.

7. Procédé selon la revendication 5, caractérisé par le fait que la meule tourne avec une vitesse de 30 m/sec.

8. Procédé selon l'une quelconque des revendications 5 à 7, caractérisé par le fait que en plus de la rotation de la meule les deux surfaces sont entraînées en un mouvement oscillatoire l'une par rapport à l'autre dans une direction transversale par rapport au sens de la rotation.

9. Procédé selon l'une quelconque des revendications 5 à 8, caractérisé par le fait que la surface à façonner du comprimé est liée à une surface en carbure fritté, le sens de la rotation de la meule allant de la surface du comprimé vers la surface en carbure.

10. Procédé selon l'une quelconque des revendications précédentes, caractérisé par le fait que la surface de travail de l'outil est un alliage dont le composant principal est du fer.

11. Procédé selon la revendication 10, caractérisé par le fait que l'alliage contient au moins 60% en poids de fer.

12. Procédé selon la revendication 11, caractérisé en ce que l'alliage contient au moins 90% en poids de fer.

13. Procédé selon l'une quelconque des revendications 1 à 9, caractérisé par le fait que la surface de travail est en acier doux.

## Patentansprüche

1. Verfahren zur Formung einer Oberfläche eines Diamantcompacts, wobei man die Oberfläche des zu formenden Compacts mit der Arbeitsfläche eines Werkzeugs in Berührung bringt und die beiden sich berührenden Oberflächen relativ zueinander so bewegt, daß die Oberfläche des Compacts zu einem vorbestimmten Profil geformt wird, dadurch gekennzeichnet, daß die Arbeitsfläche aus einem carbidbildenden Metall oder einer ein solches Metall enthaltenden Legierung besteht.

2. Verfahren nach Anspruch 1, dadurch gekennzeichnet, daß die Oberfläche des zu formenden Compacts eine Schneidkante des Compacts ist und die Formung aus dem Schärfen dieser Schneidkante besteht.

3. Verfahren nach Anspruch 1, dadurch gekennzeichnet, daß die Oberfläche des zu formenden Compacts eine flache Oberfläche des Compacts ist und die Formung aus dem Polieren dieser Oberfläche besteht.

4. Verfahren nach Anspruch 1, dadurch gekennzeichnet, daß die Oberfläche des zu formenden Compacts eine das Loch in einem Drahtziehring begrenzende Oberfläche ist und die Formung aus der Entfernung von Material von dieser Oberfläche zur Bildung eines Lochs mit einem vorbestimmten Profil besteht.

5. Verfahren nach Anspruch 1 bis 3, dadurch gekennzeichnet, daß das Werkzeug eine Schleifscheibe ist und die Relativbewegung zwischen dem Compact und der Schleifscheibe durch Drehen der Schleifscheibe erreicht wird.

6. Verfahren nach Anspruch 5, dadurch gekennzeichnet, daß die Schleifscheibe mit einer Umfangsgescheindigkeit von wenigstens 10 m/Sek. gedreht wird.

7. Verfahren nach Anspruch 5, dadurch gekennzeichnet, daß die Schleifscheibe mit einer Umfangsgeschwindigkeit von 30 m/Sek. gedreht wird.

8. Verfahren nach Anspruch 5 bis 7, dadurch gekennzeichnet, daß zusätzlich zur Drehung der Schleifscheibe die beiden Oberflächen in einer Richtung quer zur Drehrichtung relativ zueinander hin- und herbewegt werden.

9. Verfahren nach Anspruch 5 bis 8, dadurch gekennzeichnet, daß die zu formende Compactoberfläche an eine Oberfläche aus Sintercarbid gebunden ist und die Drehrichtung der Schleifscheibe von der Compactoberfläche zur Carbidoberfläche verläuft.

10. Verfahren nach Anspruch 1 bis 9, dadurch gekennzeichnet, daß die Arbeitsfläche des Werkzeugs aus einer Legierung besteht, deren Hauptbestandteil Eisen ist.

11. Verfahren nach Anspruch 10, dadurch gekennzeichnet, daß die Legierung wenigstens 60 Gew.-% Eisen enthält.

12. Verfahren nach Anspruch 10, dadurch gekennzeichnet, daß die Legierung wenigstens 90 Gew.-% Eisen enthält.

13. Verfahren nach Anspruch 1 bis 9, dadurch gekennzeichnet, daß die Arbeitsfläche aus Flußstahl besteht.

0 002 947

FIG. 1

16

14

18

10

17

14

16

FIG. 2

10

12

18

20

FIG. 3

10

12

1